# NEW EUROPEAN PATENT SPECIFICATION

(11) **EP 1 689 898 B2**
(45) Date of publication and mention of the opposition decision: **10.10.2018**
(45) Mention of the grant of the patent: 27.05.2009
(21) Application number: 04765856.2
(22) Date of filing: 06.10.2004
(51) Int. Cl.: C22C 29/08, B23B 27/14

(54) **CEMENTED CARBIDE BODY CONTAINING ZIRCONIUM AND NIOBIUM AND METHOD OF MAKING THE SAME**
HARTMETALL MIT ZIRKON UND NIOB UND VERFAHREN ZU DESSEN HERSTELLUNG
CORPS EN CARBURE FRITTE CONTENANT DU ZIRCONIUM ET DU NIOBIUM ET SON PROCEDE DE PRODUCTION

(30) Priority: 03.12.2003 DE 10356470
(43) Date of publication of application: 16.08.2006
(73) Proprietor: KENNAMETAL INC., Latrobe, PA 15650 (US)
(72) Inventor: HEINRICH, Hans-Wilm, 01219 Dresden (DE); WOLF, Manfred, 95488 Eckersdorf (DE); SCHMIDT, Dieter, 95445 Bayreuth (DE)
(74) Representative: Prinz & Partner mbB
(86) International application number: PCT/EP2004/011170
(87) International publication number: WO 2005/054530

(56) References cited:
- EP-A- 0 900 860
- EP-A1- 0 965 404
- EP-A2- 0 569 696
- EP-A2- 1 314 790
- CN-A- 1 425 787
- JP-A- S5 964 729
- JP-A- H11 124 672
- JP-A- H11 131 235
- JP-A- H11 140 647
- US-A- 5 643 658
- US-A1- 2001 006 594
- US-A1- 2003 129 456
- US-A1- 2003 129 456
- US-B1- 6 207 262
- US-B2- 6 756 110
- PATENT ABSTRACTS OF JAPAN vol. 2003, no. 04, 2 April 2003 (2003-04-02) & JP 2002 356734 A (KYOCERA CORP), 13 December 2002 (2002-12-13)
- BENESOVSKY F. ET AL: 'ZUR SYSTEMATIK DER PSEUDODREISTOFFSYSTEME VON HARTKARBIDEN' METALLWISSENSCHAFT UND TECHNIK vol. 9, 01 January 1960, pages 875 - 878, XP055299219
- C-NB-W PHASE DIAGRAM, ASM 2006, DIAGRAM NO. 95539, 1/1
- C-W-ZR PHASE DIAGRAM, ASM 2006, DIAGRAM NO. 955722, 1/4-4/4
- C-NB-ZR PHASE DIAGRAM, ASM 2006, DIAGRAM NO. 95540, 1/1
- SCHWARZKOPF P. ET AL: 'CEMENTED CARBIDES', 01 January 1960, THE MACMILLAN COMPANY, NEW YORK deel 'CHAPTER 5 - REACTIONS DURING THE LIQUID-PHASE SINTERING OF CARBIDE AND AUXILIARYMETAL MIXTURES', pages 74 - 77, XP055299240
- KNY E.: 'HARD METALS WITH HFZR AND NBZR CARBIDES' R&HM 01 September 1984, pages 142 - 145, XP055299262
- MCHALE A.E.: 'PHASE EQUILIBRIA DIAGRAMS - PHASE DIAGRAMS FOR CERAMISTS', vol. X, 01 January 1994, THE AMERICAN CERAMIC SOCIETY deel 'CARBON+TWO METALS', pages 368 - 369, XP055299268

## Description

### BACKGROUND OF THE INVENTION

The present invention provides a method for producing sintered cemented carbide bodies having increased resistance to plastic deformation comprising tungsten carbide (WC), a binder metal phase and a solid solution phase comprising at least one of the carbides, nitrides and carbonitrides of at least one of the elements of groups IVb, Vb and VIb of the Periodic Table of Elements. These sintered cemented carbide bodies are useful in the manufacture of cutting tools, and especially indexable cutting inserts for the machining of steel and other metals or metal alloys.

Sintered cemented carbide bodies and powder metallurgical methods for the manufacture thereof are known, for example, from U.S. Patent Re. 34,180 to Nemeth et al.. While cobalt has originally been used as a binder metal for the main constituent, tungsten carbide, a cobalt-nickel-iron alloy as taught by U.S Patent No. 6,024,776 turned out to be especially useful as a binder phase for tungsten carbide and other carbides, nitrides and carbonitrides of at least one of the elements titanium, zirconium, hafnium, vanadium, niobium, tantalum, chromium, molybdenum and tungsten, respectively.

Numerous attempts have been made in order to modify the properties or characteristics of the sintered cemented carbide bodies prepared by powder metallurgical methods. These properties include, but are not limited to, hardness, wear resistance, plastic deformation at increased temperatures, density, magnetic properties, resistance to flank wear and resistance to cratering. In order to provide cutting tools having improved wear properties at high cutting speeds, it is known, for example, that the sintered cemented carbide bodies should have increased contents of titanium or tantalum and niobium. On the other hand, however, it is known that increasing contents of titanium or tantalum or niobium result in a noticeable reduction of strength as they form solid solution carbides with tungsten carbide, since the amount of tungsten carbide-phase which provides for the maximum strength in a sintered cemented carbide body decreases with the formation of solid solution carbides.

Also well known to those skilled in the art is the fact that the addition of zirconium and hafnium increases the strength of sintered cemented carbide bodies both at room temperature and at higher temperatures. However, the increase in strength is combined with lower hardness and decreased wear resistance. In addition, a disadvantage of the addition of zirconium is its high affinity to oxygen and its poor wettability which impedes the sintering process used in the preparation of the sintered cemented carbide body.

U.S. Patents Nos. 5,643,658 and 5,503,925, both hereby incorporated by reference herein, aim at improving hot hardness and wear resistance at higher temperatures of sintered cemented carbide bodies by means of adding zirconium and/or hafnium carbides, nitrides and carbonitrides to the powder mixture of tungsten carbide and a binder metal of the iron family. As a result thereof, the hard phases of at least one of zirconium and hafnium coexist with other hard phases of metals of groups IVb, Vb and VIb, but excluding zirconium and hafnium, with said hard phases forming, in each case, solid solutions with tungsten carbide. Due to the high affinity of zirconium for oxygen, either the starting powder materials have to be extremely low in oxygen, or the oxygen content has to be controlled by using a reducing sintering atmosphere.

JP-A2-2002-356734, published on December 13, 2002, discloses a sintered cemented carbide body comprising WC, a binder phase consisting of at least one metal of the iron group, and one or more solid solution phases, wherein one of said solid solution phases comprises Zr and Nb while all solid solution phases other than the first one comprise at least one of the elements Ti, V, Cr, Mo, Ta and W, but must not comprise Zr and Nb. According to this Japanese patent document, the best cutting results are achieved at a tantalum content of less than 1% by weight of the total composition, calculated as TaC. US 2003/0129456 discloses two solid solution carbides containing Zr and Nb.

The present invention aims at achieving sintered cemented carbide bodies having increased resistance to plastic deformation at increased temperatures and, as a result thereof, having increased wear resistance. Specifically, the present invention aims at providing a powder metallurgical method of producing said sintered cemented carbide bodies. More specifically, it is an object of the present invention to provide a method for producing sintered cemented carbide body having one single homogenous solid solution phase containing zirconium and niobium.

Another object of the present invention consists in providing a method of producing said sintered cemented carbide body comprising the step of providing a powder mixture which upon sintering provides one single homogenous solid solution phase containing zirconium and niobium, and providing improved sintering activity and wettability with hard constituents of elements of groups IVb, Vb, and VIb of the periodic table of elements.

### SUMMARY OF THE INVENTION

In one form thereof, the invention is a method of producing a sintered cemented carbide body according to claim 1.

### BRIEF DESCRIPTION OF THE DRAWINGS

The following is a brief description of the drawings that form a part of this patent application:
FIG. 1 is an isometric view of a cutting tool wherein the cutting tool is a CNMG style of cutting tool;
FIGS. 2A is a photomicrograph that shows the unetched microstructure of Sample (A), which is a sintered cemented carbide body, at 1,500-fold magnification (10 micrometer scale) wherein Sample (A) was produced as disclosed hereinafter, and Sample (A) has a porosity of <A02 as shown in FIG. 2A;
FIG. 2B is a photomicrograph that shows the unetched microstructures of Sample (B), which is a sintered cemented carbide body, at 1,500-fold magnification (10 micrometer scale) wherein Sample (B) was produced according to a conventional process as disclosed hereinafter, and Sample (B) has a residual porosity of A08 as shown in FIG. 2B;
FIG. 3A is a photomicrograph of a sintered bending strength test rod, in cross section, which was made as described hereinafter and does not show sinter distortion;
FIG. 3B is a photomicrograph of a sintered bending strength test rod, in cross section, which was made in a conventional fashion as described hereinafter and very clearly shows a sinter distortion;
FIG. 4 is a photomicrograph (20 micrometer scale) showing the unetched microstructure of an embodiment of the sintered cemented carbide body wherein there is shown a binder enriched surface zone free of solid solution carbide wherein the binder enriched surface zone begins at and extends inwardly from the surface of the substrate and one single homogeneous solid solution phase (MC).

### DETAILED DESCRIPTION OF SPECIFIC EMBODIMENTS

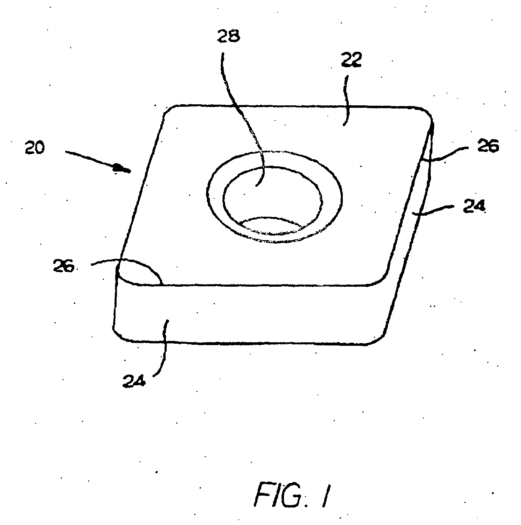

Referring to FIG. 1, there is shown a cutting tool, i.e., a sintered cemented carbide body, generally designated as 20. Cutting tool 20 has a rake face 22 and flank faces 24. There is a cutting edge 26 at the intersection of the rake face 22 and the flank faces 24. The cutting tool 20 further contains an aperture 28 by which the cutting tool 20 is secured to a tool holder. The illustration in FIG. 1 of a CNMG style of cutting tool should not be considered to limit the scope of the invention. It should be appreciated the geometry of the cutting tool can be any known cutting tool geometry.

In regard to the composition of the cutting tool, i.e., a sintered cemented carbide body, the composition contains tungsten carbide and a binder, as well as one solid solution phase that comprise the carbides and/or the carbonitrides of a combination of zirconium, niobium and tungsten as exemplified by the formulae (Zr,Nb,W)C and/or (Zr,Nb,W)CN.

In yet another embodiment of the composition, the solid solution phase comprises a carbide or carbonitride of a combination of zirconium, niobium and tungsten and at least one carbide, nitride or carbonitride of one or more of titanium, hafnium, vanadium, tantalum, chromium, and molybdenum wherein the solid solution phase is the sole solid solution phase of the body. In those cases where the solid solution phase comprises a carbide or carbonitride of a combination of zirconium, niobium and tungsten, and at least one carbide, nitride or carbonitride comprising one or more other metals, it is even more preferred that said at least one other metal is one or more of titanium, tantalum and hafnium.

According to the present invention, the binder alloy preferably comprises cobalt, a CoNi-alloy or a CoNiFe-alloy, each of which may or may not contain additional alloying elements such as chromium and tungsten. The binder alloy preferably comprises between about 3 weight percent to about to 15 weight percent of the total body.

Preferably, the total contents of a carbide or carbonitride of a combination of zirconium, niobium and tungsten of the solid solution phase comprise between about 1 weight percent and about 15 weight percent of the total body. Also preferred are those embodiments of the present invention wherein the total content of the elements titanium, hafnium, vanadium, tantalum, chromium and molybdenum does not exceed about 8 weight percent of the total body. According to especially preferred embodiments of the present invention, titanium comprises between about 1 weight percent and about 8 weight percent of the total body, tantalum comprises between about 1 weight percent and about 7 weight percent of the total body, and hafnium comprises between about 1 weight percent and about 4 weight percent of the total body.

According to the invention, the cemented carbide body has a mass ratio Nb/(Zr + Nb) of greater than or equal to 0.6.

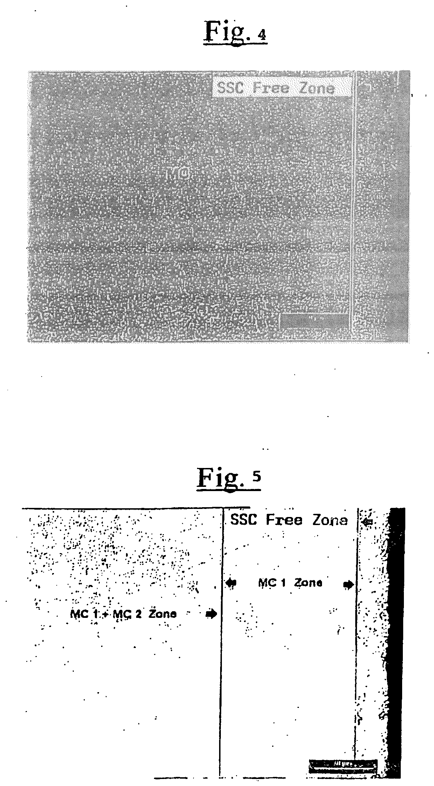

According to still another aspect, the sintered cemented carbide body comprises at least one of said nitrides or carbonitrides and comprises an outermost zone being free of any solid solution phase but binder enriched up to a depth of about 50 micrometers (µm) from an uncoated surface of said body. Embodiments of this type are shown in FIG. 4 hereof.

As is acknowledged by those having ordinary skill in the art, binder enrichment and formation of a surface zone free of solid solution carbide (SSC) is induced during sintering once at least one nitride or carbonitride is present in the starting powder mixture. Due to the formation of free nitrogen during sintering, diffusion of binder metal from the bulk towards the surface, and diffusion of solid solution phase from the surface zone towards the bulk will take place, resulting in a binder enriched surface zone being free of any solid solution phase. In those cases, however, where just one single solution phase being homogeneous throughout the body is present, said one single and homogeneous solid solution phase will be located underneath of the binder enriched zone such that the single solid solution phase is homogeneous throughout said body, except in the binder enriched zone.

According to still other preferred embodiments, one or more wear resistant layers deposited according to well-known physical vapor deposition (PVD) or chemical vapor deposition (CVD) methods are coated over a surface of the sintered cemented carbide body. Preferably, these wear resistant coatings comprise one or more of the carbides, nitrides, carbonitrides, oxides or borides of a metal of the groups IVb, Vb and VIb of the periodic table of elements, and alumina.

Referring to the method aspects of the present invention, a solid solution of a carbide or carbonitride of a combination of zirconium and niobium having a mass ratio Nb/(Zr + Nb) of 0.6 or more is used as the powdered solid solution of a carbide or carbonitride of a combination of zirconium and niobium. The powdered solid solution of a carbide or carbonitride of a combination of zirconium, niobium and tungsten preferably comprises between about 1 weight percent and about 15 weight percent of the total powder mixture.

Preferably, cobalt powder, powders of cobalt and nickel or powders of cobalt and nickel and iron or powders of a cobalt-nickel alloy or powders of a cobalt-nickel-iron alloy are used as the binder metal powders, within the method of the present invention. Optionally, the binder metal powders may include additional elements, preferably one or more of chromium and tungsten. Preferably, the binder metal powder comprises between about 3 weight percent and about 15 weight percent of the total powder mixture.

According to the present invention, the powder mixture additionally comprises at least one carbide, nitride or carbonitride of one or more of titanium, hafnium, vanadium, tantalum, chromium, and molybdenum. Preferably, the powder mixture comprises at least one of the elements titanium, hafnium, vanadium, tantalum, chromium and molybdenum in an amount of between about 1 weight percent and about 8 weight percent of the total powder mixture.

An advantage of the use of a powdered solid solution of a carbide or carbonitride of a combination of zirconium and niobium as part of the starting powder mixture according to the present invention is the fact that tantalum can be added to the composition for improving binder phase distribution and toughness in an amount of about 1 weight percent or more of the total starting powder mixture.

The best results in terms of homogeneity of the solid solution phase formed according to the present invention have been obtained if a powdered solid solution of a carbide or carbonitride of a combination of zirconium and niobium having a ratio of about 40 weight percent zirconium carbide and about 60 weight percent niobium carbide was added to the starting powder mixture.

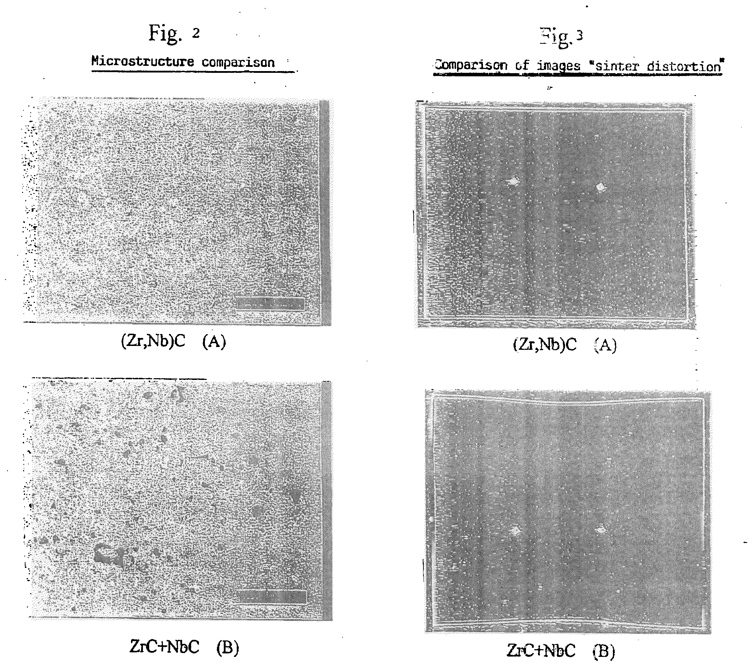

Referring to FIG. 2A and FIG. 2B, each one of these figures is a photomicrograph at 1500X (each photomicrograph as a 10 micrometer scale) that shows the unetched microstructures of two samples; namely, Sample (A) and Sample (B), respectively. Sample (A) was produced using (Zr,Nb)C in the starting powder mixture and whereas Sample (B) was conventionally made by using individual carbides; namely, ZrC and NbC instead of (Zr,Nb)C in the starting powder mixture. FIG. 2A shows that Sample (A) has a porosity of less than A02 and FIG. 2B shows that Sample (B) has a porosity of A08. In addition, as can be seen in FIG. 2A, the microstructure of Sample (A) obtained by using the (Zr,Nb)C solid solution in the starting powder is much more homogeneous in terms of porosity as compared with the microstructure (see FIG. 2B) of Sample (B), which is the conventionally prepared sintered cemented carbide body using ZrC + NbC as part of the starting powder mixture.

Referring to FIG. 3A and FIG. 3B, these figures are photomicrographs of sintered bending strength test rods wherein each is in cross section. FIG. 3B shows the microstructure of Sample (B) that is made in a conventional fashion using ZrC and NbC in the starting powder mixture wherein there is a sinter distortion that can be seen very clearly. FIG. 3A shows the microstructure of Sample (A) that was made using a solid solution carbide of zirconium and niobium (Zr,Nb)C wherein FIG. 3A does not show sinter distortion. This comparison shows that, with respect to sinter distortion, Sample (A) is much better than the conventional sample (B).

As indicated earlier, a further advantage of using a powdered solid solution of a carbide or carbonitride of a combination of zirconium and niobium as part of the starting powder mixture consists in the lower affinity to oxygen, as compared to conventional methods of producing sintered cemented carbide bodies, whereby it is not necessary to have a reducing sintering atmosphere. Due to the avoidance of any controlling and monitoring of the reducing quality of the sintering atmosphere, sintering becomes easier and less expensive according to the present invention as compared to the prior art.

Referring to FIG. 4, FIG. 4 is a photomicrograph of an embodiment of the sintered cemented carbide body wherein there is shown a binder enriched surface zone free of solid solution carbide and one single homogeneous solid solution phase (MC). FIG. 4 shows that the present invention allows the production of sintered cemented carbide bodies having one single homogeneous solid solution phase.

Further details of the invention shall be described through the following examples. Table 1 sets forth the raw materials that were used in the examples that are set forth hereinafter.

**Table 1- Raw Materials Used for the Examples**

| Raw material | Manufacturer | Average particle size [µm] |
|---|---|---|
| Co | OMG | 1.3 |
| (W,Ti)C 50/50 | H.C. Starck | 1.1 |
| NbC | Kennametal | 1.5 |
| TaC | Kennametal | 1.2 |
| (Ta,Nb)C 70/30 | H.C. Starck | 2.1 |
| HfC | Cezus | 0.5 |
| ZrC | H.C. Starck | 3.0 |
| (Zr, Nb)C 40/60 | H.C. Starck | 1.7 |
| (Zr,Nb)C 50/50 | H.C. Starck | 1.1 |
| TiC/N 70/30 | H.C. Starck | 1.5 |
| TiN | H.C. Starck | 1.1 |
| WC 1 | Kennametal | 1.0 |
| WC 2 | Kennametal | 2.5 |
| WC 3 | Kennametal | 8.0 |
| WC 4 | Kennametal | 12.0 |

In regard to the processing of the examples, for each one of the examples the specified raw materials were wet milled in an attritor for 10 hours and dried. Green compacts were pressed of the resulting powder mixtures and sintered according to the sintering conditions stated in the examples. In the examples the percentages are given in weight percent unless otherwise stated.

As is well known to those skilled in the art of powder metallurgy, the element pairs tantalum and niobium as well as zirconium and hafnium in most cases of occurrence are associated with each other such that a complete separation often is difficult to obtain. This is why in commercial applications, small amounts or traces of niobium will be present in tantalum, and vice versa, and small amounts or traces of zirconium will be present in hafnium, and vice versa. This also is valid for the present disclosure, whenever these elements or compounds thereof are mentioned by their names or chemical formulae.

### Example 1 (not inventive):

Powder mixtures A and B having the compositions (weight percent) given in Table 2 were prepared. TRS bars (ISO 3327, type B) were pressed from these powder mixtures to form green compacts. The compacts were sinter-HIPped at temperatures between 1430 and 1520 degrees Centigrade. The resulting sintered cemented carbide bodies were metallurgically tested. The results of these tests are shown in FIGS. 2A and 2B and FIGS. 3A and 3B. Sample A shows a porosity of <A02 (see FIG. 2A), whereas sample B (prior art example) shows a high residual porosity (see FIG. 2B) and strong sinter distortion (see FIG. 3B).

**Table 2 - Starting Powder Mixtures for Samples (A) and (B) (weight percent)**

| Sample | Co | (Zr, Nb) C 50/50 | ZrC | NbC | WC2 |
|---|---|---|---|---|---|
| (A) | 10 | 15 | | | balance |
| (B) | 10 | | 7.5 | 7.5 | balance |

The resulting sintered cemented carbide bodies of Sample (A) and Sample (B) had the following properties as reported in Table 3 below.

**Table 3 Selected Properties for Sample (A) and Sample (B)**

| | Density [g/cm³] | Magnetic Saturation [0.1 µTm³/kg] | Hc [Oe] | Hardness HV30 | Porosity/ Remarks |
|---|---|---|---|---|---|
| A | 12.58 | 182 | 167 | 1500 | <A02, OK (no sinter distortion) |
| B | 12.51 | 188 | 155 | 1500 | A08, sinter distortion |

In regard to the columns of Table 3, the density is reported in grams per cubic centimeter, the magnetic saturation is reported in .1 micro testla cubic meter per kilogram, the coercive force (H_{C}) is reported in oersteds, the hardness is reported as a Vickers Hardness Number using a 30 kilogram load, and the porosity was ascertained per a visual inspection. The test methods used to determine the properties set forth in Table 3, as well as throughout the entire patent application, are described below. The method to determine density was according to ASTM Standard B311-93(2002)e1 entitled "Test Method for Density Determination for Powder Metallurgy (P/M) Materials Containing Less Than Two Percent Porosity. The method used to determine the magnetic saturation was along the lines of ASTM Standard B886-03 entitled "Standard Test Methods for Determination of MAGNETIC Saturation (Ms) of Cemented Carbides. The method to determine coercive force was ASTM Standard B887-03 entitled "Standard Test Method for Determination of Coercivity (Hcs) for Cemented Carbides. The method to determine the Vickers hardness was along the lines of ASTM Standard E92-82(2003)e1 entitled "Standard Test Method for VICKERS Hardness of Metallic Materials". The method used to determine the porosity was along the lines of ASTM Standard B276-91(2000) entitled "Standard Test Method for Apparent Porosity in Cemented Carbides".

### Example 2 (not inventive):

Similar to Example 1, powder mixtures C through G were prepared, as given in Table 4 below.

**Table 4 - Starting Powder Mixtures for Samples C through G**

| | Co | (Zr,Nb)C 50/50 | TiC^{†} | TaC | HfC | WC3 |
|---|---|---|---|---|---|---|
| **C** | 6.0 | 7.5 | | | | balance |
| **D** | 6.0 | 5.0 | 2.5 | | | balance |
| **E** | 6.0 | 3.25 | 2.5 | 1.75 | | balance |
| **F** | 6.0 | 3.0 | 2.5 | 1.0 | 1.0 | balance |
| **G** | 6.0 | | 2.5 | 5.0* | | balance |

| | | | | | | |
|---|---|---|---|---|---|---|
| *as (Ta, Nb)C 70/30 †as (W, Ti)C 50/50 | | | | | | |

Cutting inserts were pressed from powder mixtures C to G in geometry CNMG120412-UN, then sintered (sinter-HIP 1505°C/85 min) and CVD coated to form a standard multilayer coating comprised of titanium carbonitride and alumina layers. All samples were coated equally. The resulting sintered bodies had the following properties as set forth in Table 5 below.

**Table 5**

| Selected Properties for Samples C through G | | | | |
|---|---|---|---|---|
| | Density [g/cm³] | Magnetic Saturation [0.1 µTm³/kg] | Hc [Oe] | Hardness HV30 |
| C | 13.95 | 91 | 199 | 1560 |
| D | 13.56 | 106 | 216 | 1560 |
| E | 13.72 | 106 | 189 | 1540 |
| F | 13.66 | 108 | 185 | 1500 |
| G | 13.88 | 111 | 165 | 1500 |

These cutting inserts were subjected to deformation resistance turning tests under the following conditions:

| | |
|---|---|
| Workpiece material: | 42CrMo4 (1.7225) - alloy steel |
| Cutting speed: | 500, 550m/min, from 550m/min in stages of 25m/min increasing up to failure of the insert due to plastic deformation because of thermal overloading. |
| Cutting time: | 15 sec. for each cutting speed |
| Feed rate: | 0.4 mm/rev. |
| Cutting depth: | 2.5 mm |
| Coolant: | none |

The results of these tests are set forth in Table 6 below.

**Table 6**

| Test Results for Examples C through G | | | | | |
|---|---|---|---|---|---|
| | Cutting time per cutting speed [seconds] | | | | |
| Cutting speed m/min | G Prior art | C | D | E | F |
| 500 | 15 | 15 | 15 | 15 | 15 |
| 550 | 15 | 15 | 15 | 15 | 15 |
| 575 | not reached | 15 | 15 | 15 | 15 |
| 600 | not reached | 15 | 15 | 15 | 15 |
| 625 | not reached | 4 | 15 | 8 | 13 |
| 650 | not reached | not reached | 2 | not reached | not reached |
| ∑ cutting time | 30 | 64 | 77 | 68 | 73 |

Further, CVD coated (same coatings as in Example 2) cutting inserts from powder mixtures C to G were subjected to a wear turning test under the following parameters:

| | |
|---|---|
| Workpiece material: | 42CrMo4 (1.7225) - alloy steel |
| Cutting speed: | 320 and 340 m/min |
| Cutting time: | 2 min for each cutting speed |
| Feed rate: | 0.3 mm/rev. |
| Cutting depth: | 2.5 mm |
| Coolant: | none |

The results are set forth in Table 7 below that report the amount of flank wear in millimeters.

**Table 7**

| Results of Testing of Samples C through G | | | | | |
|---|---|---|---|---|---|
| | Flank wear [mm] | | | | |
| Cutting speed m/min | G Prior art | C | D | E | F |
| 320 | 0.19 | 0.17 | 0.15 | 0.19 | 0.17 |
| 340 | 0.70 | 0.30 | 0.19 | 0.33 | 0.24 |

Test pieces were pressed and sintered with powder mixtures D, C, F and G. These test pieces were subjected to a hot hardness test (Vickers hardness) under the following conditions:

| | |
|---|---|
| Test weight: | 1000 grams |
| Test temperatures: | room temperature RT, 400, 600, 800 and 900°C |

The results of the hardness testing are set forth in Table 8 below.

**Table 8**

| Results of Vickers Hardness Testing for Samples D, C, F and G | | | | | |
|---|---|---|---|---|---|
| Sample | RT | 400°C | 600°C | 800°C | 900°C |
| D | 1685 | 1460 | 1180 | 789 | 599 |
| C | 1686 | 1372 | 1062 | 718 | 536 |
| F | 1710 | 1375 | 1116 | 730 | 553 |
| G prior art | 1636 | 1174 | 969 | 645 | 498 |

Just as with the hot hardness turning tests, the Vickers hardness (hot hardness) test shows a clearly increased resistance against plastic deformation at higher temperatures as compared to the prior art example G.

The compositions of the solid solution carbide (SSC) phase of samples C, D, E and F were analyzed by scanning electron microscopy (SEM) with the assistance of EDAX. In samples D, E and F two different SSC-phases could be identified by optical microscopy, whereas sample C showed one single SSC-phase, only. Where two different SSC-phases were present, the darker one was richer in tungsten and lower in zirconium, as compared with the lighter one. The results of the above determination are reported in Table 9 below that presents the composition of the solid solution carbides (as sintered) in weight percent.

**Table 9**

| Compositions of Solid Solution Phases for Samples C, D, E and F | | | | | | | | |
|---|---|---|---|---|---|---|---|---|
| | | Zr | Nb | Ti | W | Ta | Hf | SSC-phases found by optical microscopy |
| C | | 25-40 | 40-75 | | 1-25 | | | 1 |
| D | SSC 1 | 12-15 | 18-28 | 9-15 | 45-65 | | | 2 |
| | SSC 2 | 40-52 | 23-45 | 1-6 | 4-27 | | | |
| E | SSC 1 | 7-10 | 10-17 | 12-17 | 48-62 | 5-13 | | 2 |
| | SSC 2 | 43-58 | 15-25 | 3-6 | 12-32 | 5-10 | | |
| F | SSC 1 | 5-9 | 10-16 | 13-20 | 48-56 | 8-13 | 1-6 | 2 |
| | SSC 2 | 15-43 | 7-19 | 4-11 | 15-43 | 1-10 | 10-19 | |

### Example 3 (not inventive)

Similar to Example 1, powder mixtures H through K as given in Table 10 were prepared.

**Table 10**

| Starting Powder Mixtures for Samples H through K | | | | | |
|---|---|---|---|---|---|
| | Co | (Zr,Nb)C 50/50 | TiC^{†} | TaC | WC* |
| H | 6.0 | 2.0 | | | balance |
| I | 6.0 | 2.0 | 0.5 | | balance |
| J | 6.0 | 2.0 | 1.0 | | balance |
| K | 6.0 | | | 3.5 | balance |

| | | | | | |
|---|---|---|---|---|---|
| * Mixture of WC1 and WC2: 75% WC1, 25% WC2 † as (W, Ti)C 50/50 | | | | | |

From powder mixtures H, I, J and K (prior art), cutting inserts having the geometry CNMG120412-UN were manufactured, pressed, sintered/sinter-HIP (1505°C/85 min) and CVD coated. The resulting sintered bodies had the following properties as reported in Table 11.

**Table 11**

| Selected properties of Samples H through K | | | | |
|---|---|---|---|---|
| | Density [g/cm³] | Magnetic Saturation [0.1 µTm³/kg] | Hc [Oe] | Hardness HV30 |
| H | 14.71 | 95 | 253 | 1660 |
| I | 14.57 | 96 | 300 | 1700 |
| J | 14.42 | 100 | 289 | 1680 |
| K | 14.89 | 96 | 245 | 1640 |

These cutting inserts were subjected to hot hardness tests under the following conditions:

| | |
|---|---|
| Workpiece material: | 42CrMo4 (1.7225) - alloy steel |
| Cutting speed: | increasing from 450m/min in stages of 25m/min until failure of the inserts due to plastic deformation because of thermal overloading. |
| Cutting time: | 15 sec. for each cutting speed |
| Feed rate: | 0.4 mm/rev. |
| Cutting depth: | 2.5 µm |
| Coolant: | none |

The results of these cutting tests are set forth in Table 12 below.

**Table 12**

| Results of Cutting Tests for Samples K through J | | | | |
|---|---|---|---|---|
| | Cutting time per cutting speed [seconds] | | | |
| Cutting speed m/min | K Prior art | H | I | J |
| 450 | 15 | 15 | 15 | 15 |
| 475 | 15 | 15 | 15 | 15 |
| 500 | 9 | 15 | 15 | 15 |
| 525 | not reached | 2 | 13 | 15 |
| 550 | not reached | not reached | not reached | 5 |
| 575 | not reached | not reached | not reached | not reached |
| ∑ time | 39 | 47 | 58 | 65 |

A review of these test results show a tool life improvement between about 20 percent and about 67 percent.

Further inserts made from mixtures H to K and CVD coated. These coated inserts were subjected to a wear turning test with increasing cutting speeds under the following parameters:

| | |
|---|---|
| Workpiece material: | 42CrMo4 (1.7225) - alloy steel |
| Cutting speed: | 260, 300, 320 and 340 m/min |
| Cutting time: | 2 min each cutting speed |
| Feed rate: | 0.5 mm/rev. |
| Cutting depth: | 1.5 mm |
| Coolant: | none |

The results are set forth in Table 13.

**Table 13**

| Results of Cutting Tests for Coated Samples K through J | | | | |
|---|---|---|---|---|
| | Flank wear [mm] | | | |
| Cutting speed m/min | K Prior art | H | I | J |
| 260 | 0.14 | 0.14 | 0.13 | 0.13 |
| 300 | 0.20 | 0.20 | 0.17 | 0.17 |
| 320 | 0.31 | 0.25 | 0.21 | 0.21 |
| 340 | not reached | 0.39 | 0.29 | 0.29 |

### Example 4 (not inventive):

Powder mixtures L (comparative) and M (prior art) were prepared according to the compositions given in Table 14 (the compositions are set forth in weight percent below:

**Table 14**

| Starting Powder Mixtures for Samples L and M | | | | | | | | |
|---|---|---|---|---|---|---|---|---|
| | Co | (Zr,Nb)C 50/50 | TiC^{†} | TiN | TiCN 70/30 | TaC | NbC | WC4 |
| L | 6.3 | 4.0 | 0.8 | | 1.2 | 1.0 | 0.3 | balance |
| M | 6.3 | | 1.7 | 0.8 | | 5.4* | | balance |

| | | | | | | | | |
|---|---|---|---|---|---|---|---|---|
| *as (Ta,Nb)C 70/30 †as (W,Ti)C 50/50 | | | | | | | | |

Cutting inserts were pressed from powder mixtures L and M in geometry CNMG120412-UN, then sintered (sinter-HIP 1505°C/85 min) and CVD coated. The resulting sintered bodies had the following properties as reported in Table 15. In addition to the properties reported for the above examples, Table 15 also reports the depth of the cobalt-enriched SSC-free zone in micrometers and the volume percent of cubic carbides present except for tungsten carbide.

**Table 15**

| Selected Properties of Cutting Inserts of Samples L and M | | | | | | |
|---|---|---|---|---|---|---|
| | Density [g/cm³] | Magnetic Saturation [0.1 µTm³/kg] | Hc [Oe] | Hardness HV30 | Co enriched SSC free zone [µm] | Cubic Carbides Vol.-% |
| L | 13.57 | 114 | 166 | 1460 | 25 | 14.8 |
| M | 13.92 | 113 | 149 | 1460 | 25 | 13.7 |

These cutting inserts were subjected to a toughness test (interrupted cutting test) with the following conditions:

| | |
|---|---|
| Workpiece material: | Ck60 (1.1221) - carbon steel |
| Cutting speed: | 200 m/min |
| Cutting depth: | 2.5 mm |
| Feed rate: | 0.3, 0.4, 0.5 mm/rev., 100 impacts per feed rate. |
| Coolant: | none |

The feed was increased according to the mentioned increments until breakage occurred. Table 16 below sets forth the results of the toughness test.

**Table 16**

| Results of Toughness Test (Interrupted Cutting) for Samples L and M | | | | |
|---|---|---|---|---|
| | No. of impacts until breakage | | | |
| | Insert 1 | Insert 2 | Insert 3 | Average |
| L | 950 | 875 | 950 | 925 |
| M prior art | 875 | 692 | 820 | 796 |

Additional cutting inserts were subjected to a deformation resistance turning test under following conditions:

| | |
|---|---|
| Workpiece material: | 42CrMo4 (1.7225) - alloy steel |
| Cutting speed: | 400, 430, 460 m/min in stages of 30 m/min increasing up to failure of the insert due to plastic deformation because of thermal overloading |
| Cutting time: | 5 sec. for each cutting speed |
| Cutting depth: | 2.5 mm |
| Feed rate: | 0.3 mm/rev. |
| Coolant: | none |

Table 17 sets for the results of these deformation resistance turning tests.

**Table 17**

| Results of Deformation Resistance Turning Tests for Samples L and M | | |
|---|---|---|
| Cutting speed m/min | M Prior Art | L |
| 400 | 5 | 5 |
| 430 | 5 | 5 |
| 460 | not reached | 5 |
| 490 | not reached | 5 |
| Total | | |
| Cutting Time | 10 sec. | 20 sec. |

Further cutting inserts were subjected to a wear turning test under the following conditions:

| | |
|---|---|
| Workpiece material: | 42CrMo4 (1.7225) - alloy steel |
| Cutting speed: | 208 m/min |
| Cutting depth: | 2.5 mm |
| Feed rate: | 0.4 mm/rev. |
| Coolant: none | |

The results of the wear turning test are reported in Table 18 below.

**Table 18**

| Results of Wear Turning Tests for Samples L and M | | |
|---|---|---|
| Cutting time | Flank wear [mm] | |
| | M prior Art | L |
| 2 min | 0.191 | 0.153 |
| 4 min | 0.352 (End of Life) | 0.250 |

### Example 5

Powder mixtures N and O were prepared having the compositions (in weight percent) given in Table 19.

**Table 19**

| Starting Powder Compositions for Samples N and O | | | | | | | | |
|---|---|---|---|---|---|---|---|---|
| | Co | (Zr,Nb)C 50/50 | (Zr,Nb)C 40/60 | TiC^{†} | TiCN 70/30 | TaC | NbC | WC3 |
| N | 6.0 | 8.0 | | 1.0 | 1.5 | 1.0 | 0.4 | balance |
| O | 6.0 | | 10.0 | 1.0 | 1.5 | 1.0 | 0.4 | balance |

| | | | | | | | | |
|---|---|---|---|---|---|---|---|---|
| †as (W,Ti)C 50/50 | | | | | | | | |

From starting powder mixtures N (comparative) and O, green compacts were pressed (TRS bars, ISO 3327, type B) and vacuum sintered at 1530°C/60min. The as sintered properties of Samples N and O are set forth in Table 20 below:

**Table 20**

| Selected Properties of Samples N and O | | | | | |
|---|---|---|---|---|---|
| | Density [g/cm³] | Magnetic Saturation [0.1 µTm³/kg] | Hc [Oe] | Hardness HV30 | Co enriched SSC free zone [µm] |
| N | 13.10 | 108 | 221 | 1610 | 20 |
| O | 12.89 | 103 | 206 | 1660 | 15 |

An analysis of the sintered bodies revealed that Sample N shows two different coexisting solid solution phases that were identified by optical microscopy. By optical microscopy Sample O showed one single homogeneous solid solution phase. The compositional results of the analysis of Samples N and O are set forth in Table 21 below.

**Table 21**

| Composition of solid solution carbides (as sintered) in Samples N and O (components are set forth in weight percent) | | | | | | | |
|---|---|---|---|---|---|---|---|
| | | Zr | Nb | Ti | W | Ta | SSC-phases found by optical microscopy |
| N | SSC1* | 12-17 | 19-22 | 8-13 | 44-48 | 8-11 | 2 |
| | SSC2 | 33-38 | 49-57 | 1-4 | 2-10 | 2-7 | |
| O | | 13-16 | 24-28 | 8-10 | 39-45 | 7-10 | 1 |

| | | | | | | | |
|---|---|---|---|---|---|---|---|
| *) Thickness of SSC1-zone: about 80 to 120 µm | | | | | | | |

The sintered cemented carbide bodies of the method of the present invention have increased resistance to plastic deformation, resulting in improved wear resistance and extended life time of cutting tools produced from said sintered cemented carbide bodies. Besides, a considerable minimization of porosity and sinter distortion as compared to prior art sintered cemented carbide bodies, is obtained by the present invention.

There is also a considerable advantage of the method of the present invention which uses a powdered solid solution of (Zr,Nb)C instead of the conventionally used single carbides ZrC and NbC. This advantage is due to the lower affinity of the solid solution of (Zr,Nb)C to oxygen that results in that neither a reducing sintering atmosphere is necessary nor a continuous control of the reducing force of the sinter atmosphere is necessary.

## Claims

1. A method of producing the sintered cemented carbide body having increased resistance to plastic deformation, comprising tungsten carbide, a binder phase comprising at least one metal of the iron group or an alloy thereof, and a solid solution phase comprising at least one of the carbides and carbonitrides of a combination of zirconium, niobium, and tungsten, wherein said body has a mass ratio Nb/(Zr+Nb) of 0.6 or more, and wherein said solid solution phase is the sole solid solution phase of said body and comprises a carbide or carbonitride of a combination of zirconium, niobium and tungsten, and at least one carbide, nitride or carbonitride of one or more of titanium, hafnium, vanadium, tantalum, chromium, and molybdenum; the method comprising the steps of
a) providing a powder mixture comprising tungsten carbide, a binder metal powder comprising at least one metal of the iron group or an alloy thereof, and at least one of the carbides and carbonitrides of both, zirconium and niobium;
b) forming a green compact of said powder mixture;
c) vacuum sintering or sinter-HIP said green compact at a temperature of from 1400 to 1560 °C;
**characterized in that** in step a) a powdered solid solution of the carbides or carbonitrides of zirconium and niobium having a mass ratio Nb/(Zr + Nb) of 0.6 or more is used to form said powder mixture.

2. The method of claim 1, wherein cobalt, a powdered CoNi-alloy or a powdered CoNiFe-alloy is used as said binder metal powder.

3. The method of claim 2, wherein said binder metal powder additionally comprises at least one of chromium and tungsten.

4. The method of any one of claims 1 to 3, wherein said binder metal powder comprises 3 to 15% of the total weight of said powder mixture.

5. The method of any one of claims 1 to 4, wherein said powder mixture additionally comprises at least one carbide, nitride or carbonitride of one or more of titanium, hafnium, vanadium, tantalum, chromium, and molybdenum.

6. The method of any one of claims 1 to 5, wherein said powdered solid solution of a carbide or carbonitride of a combination of zirconium and niobium comprises 1 to 15% of the total weight of said powder mixture.

7. The method of any one of claims 1 to 6, wherein said powder mixture comprises at least one of the elements titanium, hafnium, vanadium, tantalum, chromium and molybdenum in an amount of 1 to 8 % of the total weight of said powder mixture.

## Patentansprüche

1. Verfahren zur Herstellung des Sinterhartmetallkörpers, der eine erhöhte Beständigkeit gegenüber plastischer Verformung aufweist, umfassend Wolframcarbid, eine Binderphase umfassend mindestens ein Metall der Eisengruppe oder eine Legierung davon, und eine Festlösungsphase umfassend mindestens eines der Carbide und Carbonitride einer Kombination von Zirkonium, Niob, Wolfram, wobei der Körper ein Massenverhältnis von Nb/(Zr+Nb) von 0,6 oder mehr aufweist, und wobei die Festlösungsphase die einzige Festlösungsphase des Körpers ist und ein Carbid oder Carbonitrid einer Kombination von Zirkonium, Niob und Wolfram umfasst, und mindestens ein Carbid, Nitrid oder Carbonitrid von einem oder mehreren von Titan, Hafnium, Vanadium, Tantal, Chrom und Molybdän, wobei das Verfahren die folgenden Schritte umfasst
a) Bereitstellen einer Pulvermischung, umfassend Wolframcarbid, ein Bindermetallpulver umfassend mindestens ein Metall der Eisengruppe oder eine Legierung davon, und mindestens eines der Carbide und Carbonitride von sowohl Zirkonium als auch Niob;
b) Bilden eines grünen Presslings aus der Pulvermischung;
c) Vakuumsintern oder Sintern und heiß-isostatisches Pressen des grünen Presslings bei einer Temperatur von 1400 bis 1560 °C;
**dadurch gekennzeichnet, dass** in Schritt a) eine pulverförmige feste Lösung der Carbide oder Carbonitride von Zirkonium und Niob mit einem Massenverhältnis von Nb/(Zr+Nb) von 0,6 oder mehr zum Bilden der Pulvermischung verwendet wird.

2. Verfahren nach Anspruch 1, wobei Kobalt, eine pulverförmige CoNi-Legierung oder eine pulverförmige CoNiFe-Legierung als das Bindermetallpulver verwendet wird.

3. Verfahren nach Anspruch 2, wobei das Bindermetallpulver zusätzlich mindestens eines von Chrom und Wolfram umfasst.

4. Verfahren nach einem der Ansprüche 1 bis 3, wobei das Bindermetallpulver 3 bis 15 % des Gesamtgewichts der Pulvermischung umfasst.

5. Verfahren nach einem der Ansprüche 1 bis 4, wobei die Pulvermischung zusätzlich mindestens ein Carbid, Nitrid oder Carbonitrid von einem oder mehreren von Titan, Hafnium, Vanadium, Tantal, Chrom und Molybdän umfasst.

6. Verfahren nach einem der Ansprüche 1 bis 5, wobei die pulverförmige feste Lösung aus einem Carbid oder Carbonitrid einer Kombination von Zirkonium und Niob 1 bis 15 % des Gesamtgewichts der Pulvermischung umfasst.

7. Verfahren nach einem der Ansprüche 1 bis 6, wobei die Pulvermischung mindestens eines der Elemente Titan, Hafnium, Vanadium, Tantal, Chrom und Molybdän in einer Menge von 1 bis 8 % des Gesamtgewichts der Pulvermischung umfasst.

## Revendications

1. Procédé de production d'un corps en carbure cémenté fritté possédant une résistance accrue à la déformation plastique, comprenant du carbure de tungstène, une phase liante comprenant au moins un métal du groupe du fer ou un alliage de celui-ci, et une phase de solution solide comprenant au moins l'un des carbures et des carbonitrures d'une combinaison de zirconium, de niobium et de tungstène, et dans lequel ledit corps a un rapport massique Nb/(Zr + Nb) de 0,6 ou plus, et dans lequel ladite phase de solution solide est la seule phase de solution solide dudit corps et comprend un carbure ou un carbonitrure d'une combinaison de zirconium, de niobium et de tungstène, et au moins un carbure, un nitrure ou un carbonitrure d'un ou plusieurs parmi le titane, le hafnium, le vanadium, le tantale, le chrome et le molybdène ; le procédé comprenant les étapes consistant à
a) fournir un mélange de poudres comprenant du carbure de tungstène, une poudre métallique liante comprenant au moins un métal du groupe du fer ou un alliage de celui-ci, et au moins l'un des carbures et des carbonitrures à la fois de zirconium et de niobium ;
b) former une pastille crue dudit mélange de poudres ;
c) fritter sous vide ou fritter sous compression isostatique à chaud ladite pastille crue à une température de 1400 à 1560 °C ;
**caractérisé en ce qu'**à l'étape a) une solution solide en poudre des carbures ou carbonitrures de zirconium et de niobium ayant un rapport massique NB/(Zr + Nb) de 0,6 ou plus est utilisée pour former ledit mélange de poudres.

2. Procédé selon la revendication 1, dans lequel du cobalt, un alliage CoNi en poudre ou un alliage CoNiFe en poudre est utilisé en tant que poudre métallique liante précitée.

3. Procédé selon la revendication 2, dans lequel ladite poudre métallique liante comprend en outre au moins l'un du chrome et du tungstène.

4. Procédé selon l'une quelconque des revendications 1 à 3, dans lequel ladite poudre métallique liante constitue de 3 à 15 % du poids total dudit mélange de poudres.

5. Procédé selon l'une quelconque des revendications 1 à 4, dans lequel ledit mélange de poudres comprend en outre au moins un carbure, nitrure ou carbonitrure d'un ou plusieurs parmi le titane, le hafnium, le vanadium, le tantale, le chrome et le molybdène.

6. Procédé selon l'une quelconque des revendications 1 à 5, dans lequel ladite solution solide en poudre d'un carbure ou d'un carbonitrure d'une combinaison de zirconium et de niobium constitue de 1 à 15 % du poids total dudit mélange de poudres.

7. Procédé selon l'une quelconque des revendications 1 à 6, dans lequel ledit mélange de poudres comprend au moins un des éléments titane, hafnium, vanadium, tantale, chrome et molybdène en une quantité de 1 à 8 % du poids total dudit mélange de poudres.
